# EUROPEAN PATENT SPECIFICATION

(11) **EP 2 055 181 B1**
(45) Date of publication and mention of the grant of the patent: **20.10.2010**
(21) Application number: 08165749.6
(22) Date of filing: 02.10.2008
(51) Int. Cl.: A01G 9/08, A01G 9/10

(54) **Device for placing plants in pots**
Vorrichtung zur Platzierung von Pflanzen in Töpfen
Dispositif pour le positionnement de plantes dans des pots

(30) Priority: 03.10.2007 NL 2000898
(43) Date of publication of application: 06.05.2009
(73) Proprietor: van der Burg, William, 2222 AN Katwijk (NL)
(72) Inventor: van der Burg, William, 2222 AN Katwijk (NL)
(74) Representative: van Westenbrugge, Andries

(56) References cited:
- EP-A- 1 647 180

## Description

The present invention relates to a device for placing a plant in a pot, comprising a supply line for the pots, a supply line for the plants, wherein said supply line for plants comprises a series of plant-grippers which can be transpositioned at the same speed as the speed of the supply line for pots, wherein each plant-gripper comprises gripping fingers positionable between an uptake/release position and a holding position and means for repositioning those plant-grippers in a direction perpendicular to the advancing direction of the supply line for pots in order for the plants to be placed in the pots.

Such a device is known in NL-1.027.232 by the same applicant.
This patent describes a system wherein the plant-grippers are mounted on a support which can be moved in an upward or downward direction relative to the bearing surface for the pots in order for the plants to be placed in the pots when the pots are filled with substrate.

Although such a device is perfectly suited to its purpose, it is technically complex and it is not easy to modify or adapt the course of movement of the plants relative to the pots.

Such a device is also known from EP-A-1 647 180.

It is the objective of the present invention to provide an easily constructible device which enables the placement of the plants in the pots in a very accurate manner.

This objective is achieved in the device as described above in that a control device is provided within the plant-gripper, disposed therein in order to cause the opening and closing of the gripper fingers when repositioned, the control device being connected to a moveable follower mounted perpendicular to the advancing direction of the supply line and wherein said device comprises a stationary control path extending in the advancing direction of the plant-grippers to which the follower engages and with control path sections for opening and/or closing the gripping fingers.

According to the present invention, a separate control path is present which is preferably constructed in sections and extends in the advancing direction of the plant-grippers. A follower (cam) engages the control path and is responsible for operating the gripping fingers of the plant-gripper. Since the supply line for plants and the advancing direction of the plant-grippers is substantially horizontal, the control direction will preferably be essentially vertical. It is possible to mount this control path at a considerable distance from the bearing surface with the pots, thus preventing any interruption in the path of motion. Moreover, it is also possible to mount such cam paths above filling assemblies for filling the pots.

According to a simple embodiment of the invention, the plant-gripper is suspended on a tube or other closed section and an operating rod is disposed in that tube or closed section which can be moved back and forth by the follower along a slit provided in the tube. The gripping fingers can be moved by moving the follower back and forth (up and down).

A similar construction can also be used, for example, for moving a support up and down, to which the gripping fingers are mounted, thus enabling the movement of the gripping fingers in relation to the supply line for pots. The plant, which is grasped by the gripping fingers, must be gradually positioned in the pots, possibly simultaneously with the supply of substrate in the pots.

It is possible, according to the invention, to execute this descending movement of the plants by causing a descending movement of the gripper fingers, resulting from the transposition of the support onto which the gripping fingers are mounted relative to the suspension of the plant-gripper. In this case, there can also be a suspension provided with a tube or other section in which or around which a further section extends telescopically and which is attached to a follower engaging a control path. This control path extends in the advancing direction of the plant-grippers and can also be mounted at a considerable distance from the bearing surface of the supply line for pots, as in the case of the previously described control path.

The suspension can be a simple construction suspended in a rail, for example, which is driven by a path. The drive is preferably such, that it is enables accurate control in the section in which the plant-gripper advances above the pots, thus continuously ensuring that the plants are at all times positioned above the respective pots. In conjunction herewith, it is also important to ensure that the pots are placed in an accurately defined position. To this end, catch pins and so forth can be present and the same construction can be applied for the drive of the suspension.

In the return path for the plant-grippers, constructions can be present to enable the buffering of the plant-grippers. This will ensure that the plant-grippers run parallel with the supplied pots under all circumstances. The drive can be either intermittent or continuous. In the case of a continuous movement, insertion of the plants is achieved whilst the plants are in motion.

Moreover, it is possible to mount cupped elements to the gripping fingers for the containment of the roots. This is because it is important to ensure that the roots are placed inside the pots and not with the roots hanging over the sides. Such cupped elements can opened and closed with the use of a further cam path, as described hereinbefore.

According to another advantageous embodiment of the invention, the gripping fingers are rotatably mounted. This can be achieved by making the support onto which the grippers are mounted rotatable in relation to the rest of the plant-grippers. It is possible, for example, to mount a wheel, which is rotatable in relation to a substantially vertical centre-line. Rotation is achieved by means of a stationary or moveable conveyor path to which such a wheel engages. It is also possible to allow a comparative rotation of the pots so as to enable the pots to be filled from one side. In addition, it is also possible to achieve deviations in rotation between the plants and the pots to cause a kind of 'screwing' motion of the plants as they are placed in the pots.

The plants can be positioned in the plant-gripper either mechanically or by hand. In order to prevent damage to the plants, the gripping fingers of the plant-gripper can be provided with a resilient layer of foam material. Quite surprisingly, this also ensures a strong and secure grip of the plant. According to one specific embodiment of the invention, such foam material is easily attached to the gripping fingers in a removable manner, for example with the use of Velcro tape. This also helps to prevent the transfer of diseases and such between different series of plants by simply replacing the foam material elements.

The device described above can be used for various kinds of plants, more specifically plants which are not easily manageable, such as Phalaenopsis. The device also enables the high-speed movement of the plant-grippers and it is easy to make modifications for pots with different heights, different distances and so forth. It is also possible to make modifications when plants are exchanged. The manner by which the plants are inserted into the pots can be adapted simply by replacing the path sections.

The invention is described in more detail below with reference to a drawing showing an exemplary embodiment, in which:
Fig. 1a and 1b are schematic views of the device according to the present invention;
Fig. 2 shows a detail of the downstream part of the device according to fig. 1;
Fig. 3 shows in detail a plant-gripper according to the invention and the control thereof, and
Fig.4 shows an alternative embodiment of the plant-gripper according to fig. 3.

In the figures, the device according to the invention is indicated in its entirety by the numeral 1. This is embodied to place plants in pots when the pots are already filled with substrate. It is also possible to use the device for pots which have already been filled with soil or any other substrate (bark) and wherin an opening in the substrate is already made for the insertion of the plant, or wherein such openings can be made whilst positioning the device.

The device comprises a supply line 2 for the pots 3. Details of this supply line are not shown but this will preferably comprise a conveyor with an open bearing surface so as to enable the simple removal of any spilled soil or other particles. The conveyor may also comprise means such as pins and so forth for the proper and accurate guidance of the pots. This is of great importance in order to ensure that the plants are accurately positioned in relation to the pot.

Numeral 4 indicates a conveyor path for the plants. This comprises a circular follower path 5 which operates a number of plant-grippers 6. The motion of plant-grippers 6 in the portion suspended above the conveyor path occurs positively, thus ensuring at all times that the plant-grippers 6 are positioned accurately above the respective pots 3.

The figures show plant-grippers 6 are suspended on a stationary section 7 within which the follower-path moves. Each plant-gripper comprises a suspension 8 with a suspension tube 18.

Suspension tube 18 is provided with a longitudinal slit 9. A follower 12 constructed as a roller is disposed on the upper side of the slit 9 and is moveable in an upward and downward direction. Roller 12 is guided along a control path 10. A central rod (or other element) 17 is connected to the follower 12, which extends to a support 14 and can cause the gripping fingers 15 to open and close in a manner not shown via a pivotal construction 16.

Follower 13 is disposed beneath follower 12 and is engaged to control path 11. A tube 19 is connected to follower 13. The gripping fingers are suspended on tube 19 via support 14. A rotary bearing is mounted between support 14 and tube 19 so that support 14 can be caused to rotate with the gripping fingers around an axis 31 in relation to tube 19. Rotation is caused by a wheel 20 mounted to support 14 which can be engaged with a belt 21. This belt 21 can be either stationary or repositionable.

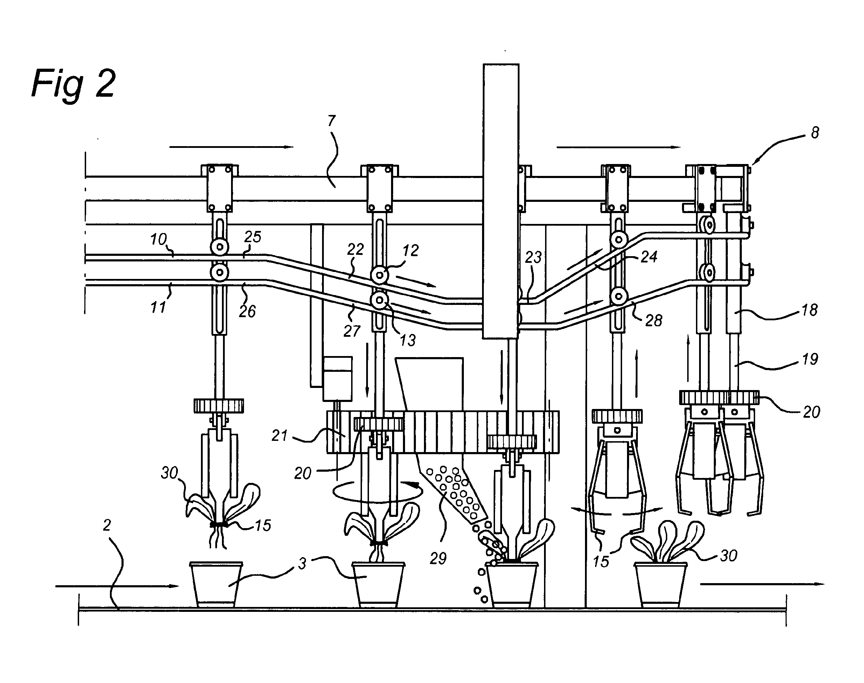

Fig. 2 shows that control path 11 comprises various path sections for the upward and downward movement of support 14 and control path 10 for opening and closing grippers 15.

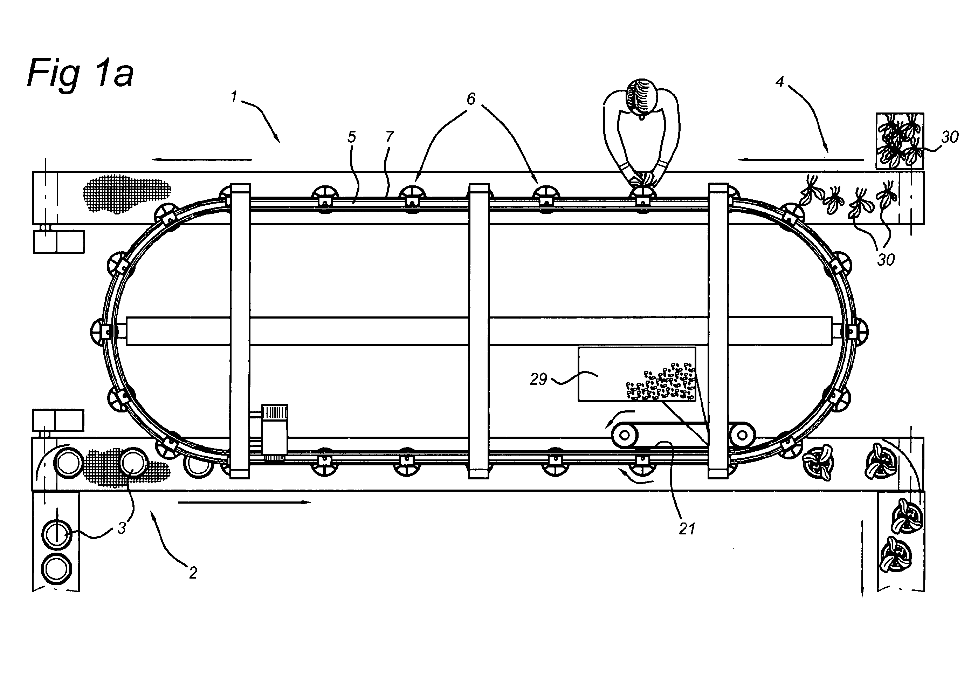

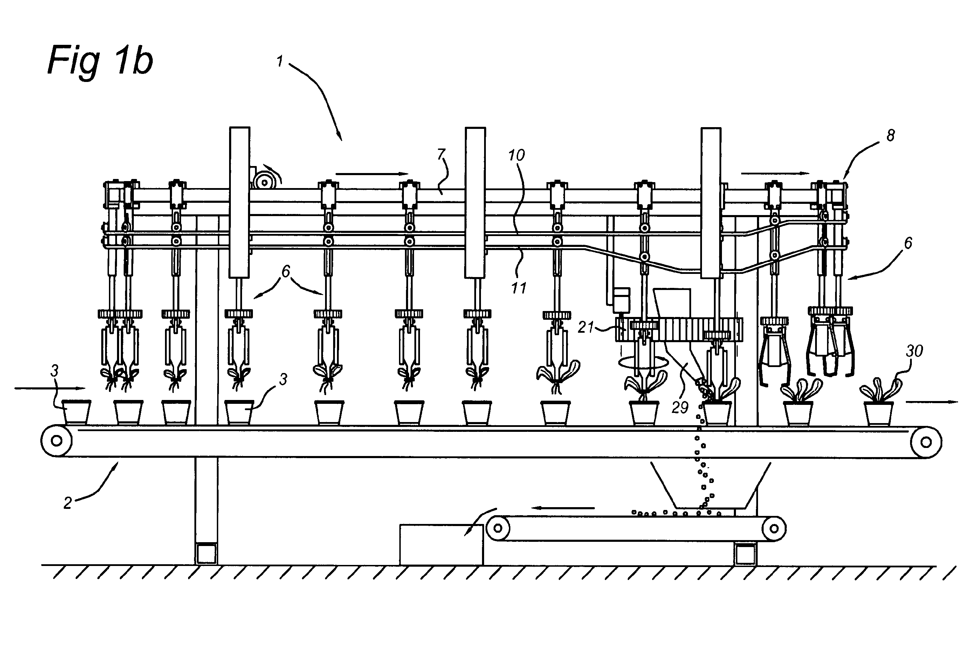

Fig. 1 shows a schematic view 29 of a substrate insertion device. Any conceivable construction known in the prior art can be used, in various steps, to insert a substrate consisting of earth or other means into the pots 3. As indicated above, it is also possible to fill the pots beforehand and either include insertion process 29 of the substrate or omit process 29 entirely.

The device as described above works as follows: In the position at the top right in Fig. 1, the plants 30 are placed between the opened gripping fingers. This can be achieved either mechanically or manually. Subsequently, the plants 30 are moved in their gripped position above the pots 3 (fig. 1b), after which the gradual insertion of the plants in the pots occurs. Downward movement of the support 14 with gripping fingers 15 occurs at path sections 22 and 27 interconnecting to the substantially horizontally positioned path sections 25 of control path10 and path section 26 of control path 11.
Path section 27 is sloped, i.e. with a gradient towards the supply line 2 in order for the gripping fingers with the plants to be moved towards the pots 3. In order to avoid reaction of the gripping fingers, it is necessary for path 22 to have the same parallel extension.

Path section 23 interconnects with path section 22, followed by path section 24 where the follower 12 follows a path deviating from the path of follower 13. This enables the gripping fingers 15 to be opened first. This occurs when the gripping fingers are inserted at a sufficient depth within the pot to ensure the correct positioning of the plant 30 in the pot. The upward movement of the support 14 with section 28 occurs when the gripping fingers are opened further.

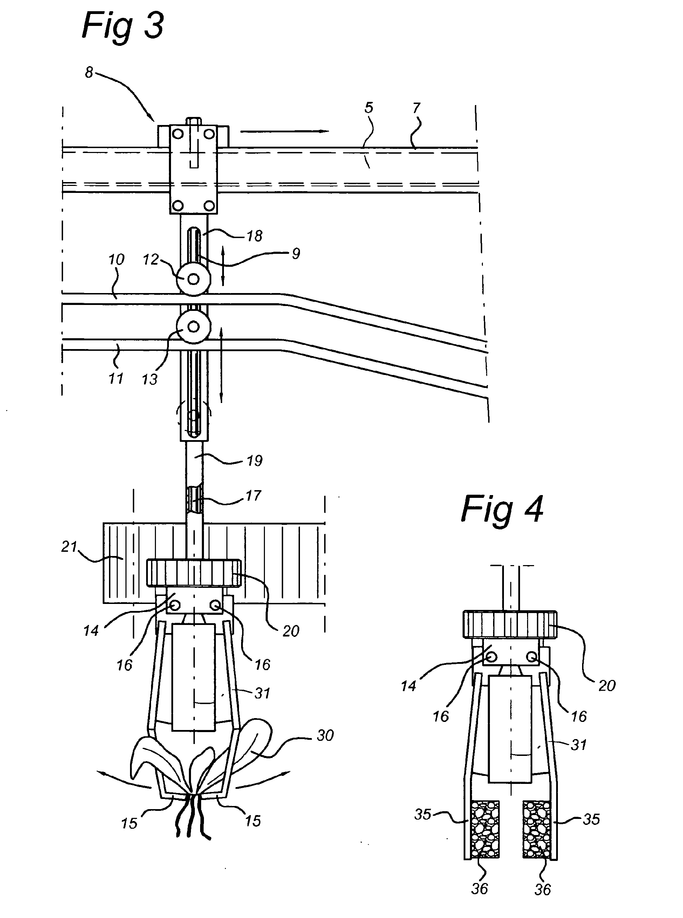

Fig. 4 shows an alternative of the plant-gripper, where the gripping fingers are indicated by numeral 35. Each gripping finger is provided with a resilient foam material 36, such as a spongy material, so as to enable the secure gripping of plants without causing any damage.

The construction shown here can be optionally provided with cupped elements for the purpose of maintaining the position of the roots of the plant when inserted into the pots.

After the above those skilled in the art will be readily aware of other alternatives. For example, with the use of the construction as described above, it is possible to adapt the course of the various parts of the plant-gripper in an extremely simple manner to any requirements which may apply at that particular moment. The movement of plant-grippers and supply line for pots, as described above, can be either circular or linear.

## Claims

1. Device for placing a plant (30) in a pot (3), comprising a supply line (2) for pots, a supply line (4) for plants, wherein said supply line for plants comprises a series of gripping fingers (6), the gripping fingers (6) being moveable at the same speed as the supply line for pots, wherein each plant-gripper comprises gripping fingers (15, 35) positionable between an uptake/release position and a holding position, and means for positioning said plant-grippers in a direction perpendicular to the advancing direction of said supply line for pots, **characterized in that** a control member (17) is present in the plant-gripper (6), embodied to open or close said gripping fingers (15, 35) when repositioned, said control member being connected to a follower (12) mounted to said plant-gripper and positionable in the direction perpendicular to the advancing direction of said supply line, and wherein said device (1) comprises a stationary control path (10) extending in the advancing direction of said plant-grippers to which said follower (12) engages and with control path sections for opening and closing said gripping fingers.

2. Device according to claim 1, wherein said plant-gripper comprises a longitudinal suspension (8) and said member extends in a direction parallel to said suspension.

3. Device according to claim 2, wherein said suspension is composed of a substantially closed section and said device (17) constructed as a rod extending within that section.

4. Device according to any of the preceding claims, wherein said means comprise a suspension (8) for said plant-grippers (6), disposed at a substantially equal distance to the supply line for the pots and a carrier (19) mounted to said suspension for said plant-gripper, wherein said carrier is made moveable in relation to said supply line for pots, wherein control means are present for controlling the position of said carrier (19) relative to said suspension (18).

5. Device according to claim 4, wherein the control means comprise a follower (13) mounted to said carrier and a stationary control path (11) extending in the advancing direction of said plant-grippers for gripping said follower, said control path comprising control path sections for moving said plant-grippers in an upward and downward direction.

6. Device according to claim 4 or 5, wherein the carrier is constructed telescopically in relation to said suspension (18).

7. Device according to any of the preceding claims, whereby said gripping fingers (15) are mounted to a support, said support being rotatable in relation to said plant-gripper (6) around an axis (31) substantially perpendicular to the advancing direction of the supply line for the pots.

8. Device according to claim 7, wherein said support (14) comprises a pulley wheel (20) with a belt (21) disposed therein for engaging said pulley wheel (20).

9. Device according to any of the preceding claims, comprising root containment means mounted to said plant-grippers and extending between said plant-grippers and the supply line for pots.

10. Device according to claim 9, wherein said root containment means comprises retractable cupped elements.

11. Device according to claim 9 or 10, wherein said root containment means comprise a follower for operating said retractable cupped elements and a stationary follower path which extends in the advancing direction of said plant-grippers, and comprise follower path sections for repositioning said shell elements.

12. Device according to any of the preceding claims, wherein said supply line for the pots comprises rotation means for the pots (3).

13. Device according to any of the preceding claims, wherein said path sections comprise a longitudinal section (10, 11).

14. Device according any of the preceding claims, wherein said gripping fingers (3) of said plant-gripper (6) are provided with a cover (36) of foam material for engaging and gripping said plants.

## Patentansprüche

1. Vorrichtung zur Platzierung von Pflanzen (30) in einem Topf (3) umfassend eine Zufuhrbahn (2) für Töpfe, eine Zufuhrbahn (4) für Pflanzen, wobei die Zufuhrbahn für Pflanzen eine Serie von Greiffingern (6) umfasst, die Greiffinger (6) sind mit der gleichen Geschwindigkeit wie die Zufuhrbahn für Töpfe bewegbar, wobei jeder Pflanzengreifer Greiffinger (15, 35) umfasst, welche zwischen einer Aufnahme/Abgabe-Position und einer Halteposition positionierbar sind, und wobei Mittel zum Positionieren der Pflanzengreifer in einer Richtung senkrecht zur Vorschubrichtung der Zufuhrbahn für Töpfe vorhanden ist, **dadurch gekennzeichnet, dass** ein Steuerelement (17) in den Pflanzengreifern (6) vorhanden ist, welches zum Öffnen oder Schließen der Greiffinger (15, 35) beim Repositionieren ausgebildet ist, wobei das Steuerelement verbunden ist mit einem Folger (12), der an dem Pflanzengreifer befestigt ist und in die Richtung senkrecht zur Vorschubrichtung der Zufuhrbahn positionierbar ist, und wobei die Vorrichtung (1) einen sich in der Vorschubrichtung des Pflanzengreifers erstreckenden stationären Steuerpfad (10), mit dem der Folger (12) in Eingriff steht, mit Steuerpfadabschnitten zum Öffnen und Schließen der Greiffinger umfasst.

2. Vorrichtung nach Anspruch 1, wobei der Pflanzengreifer eine Längsaufhängung (8) umfasst und sich das Element in einer Richtung parallel zu dieser Aufhängung erstreckt.

3. Vorrichtung nach Anspruch 2, wobei die Aufhängung aus einem im Wesentlichen geschlossenen Abschnitt und die Vorrichtung (17) als ein sich in diesen Abschnitt erstreckender Stab ausgebildet ist.

4. Vorrichtung nach einem der voranstehenden Ansprüche, wobei die Mittel eine im Wesentlichen in gleichem Abstand zur Zufuhrbahn der Töpfe angeordnete Aufhängung (8) für die Pflanzengreifer (6) und einen an der Aufhängung der Pflanzengreifer befestigten Träger (19) umfassen, wobei der Träger bezüglich der Zufuhrbahn der Töpfe bewegbar ist, und wobei Steuermittel zum Steuern der Position des Trägers (19) relativ zur Aufhängung (18) vorhanden sind.

5. Vorrichtung nach Anspruch 4, wobei die Steuermittel einen an dem Träger befestigten Folger (13) und einen sich in Vorschubrichtung der Pflanzengreifer zum Greifen des Folgers erstreckenden stationären Steuerpfad (11) umfassen, wobei der Steuerpfad Steuerpfadabschnitte zum Bewegen der Pflanzengreifer in Aufwärts- und Abwärtsrichtung umfasst.

6. Vorrichtung nach Anspruch 4 oder 5, wobei der Träger in Bezug auf die Aufhängung (18) teleskopierbar ausgebildet ist.

7. Vorrichtung nach einem der voranstehenden Ansprüche, wobei die Greiffinger (15) an einer Halterung angebracht sind, wobei die Halterung in Bezug auf die Pflanzengreifer (6) um eine im Wesentlichen senkrecht zur Vorschubrichtung der Zufuhrbahn für die Töpfe verlaufende Achse (31) rotierbar ist.

8. Vorrichtung nach Anspruch 7, wobei die Halterung (14) eine Riemenscheibe (20) mit einem daran angeordneten Riemen (21) zum in Eingriffnehmen der Riemenscheibe (20) umfasst.

9. Vorrichtung nach einem der voranstehenden Ansprüche, umfassend an dem Pflanzengreifern angebrachte und sich zwischen den Pflanzengreifern und den Zufuhrbahnen für die Töpfe erstreckenden Wurzelumgebungsmittel umfasst.

10. Vorrichtung nach Anspruch 9, wobei die Wurzelumhüllungsmittel schwenkbare schalenförmige Elemente umfasst.

11. Vorrichtung nach Anspruch 9 oder 10, wobei die Wurzelumhüllungsmittel einen Folger zum Betreiben der schwenkbare schalenförmigen Elemente und einen sich in der Vorschubrichtung der Pflanzengreifer erstreckenden stationären Folgerpfad umfassen, und wobei sie Folgerpfadabschnitte zum Repositionieren der Schalenelemente aufweisen.

12. Vorrichtung nach einem der voranstehenden Ansprüche, wobei die Zufuhrbahn der Töpfe Rotationsmittel für die Töpfe (3) umfasst.

13. Vorrichtung nach einem der voranstehenden Ansprüche, wobei die Pfadabschnitte einen Längsabschnitt (10, 11) umfassen.

14. Vorrichtung nach einem der voranstehenden Ansprüche, wobei die Greiffinger (3) der Pflanzengreifer (6) mit einer Abdeckung (36) aus Schaummaterial zum in Eingriffnehmen und Greifen der Pflanzen versehen sind.

## Revendications

1. Dispositif pour positionner une plante (30) dans un pot (3), comportant une ligne d'alimentation (2) pour les pots, une ligne d'alimentation (4) pour les plantes, dans lequel ladite ligne alimentation pour les plantes comporte une série de doigts de prise (6), les doigts de prise (6) étant mobiles à la même vitesse que la ligne d'alimentation pour les pots, dans lequel chaque pince pour plante comporte des doigts de prise (15, 35) pouvant être positionnés entre une position de montée/libération et une position de maintien, et des moyens pour positionner lesdites pinces pour plante dans une direction perpendiculaire à la direction d'avancée de ladite ligne d'alimentation pour les pots, **caractérisé en ce que** un élément de commande (17) est présent dans la pince pour plante (6), conçu pour ouvrir ou fermer lesdits doigts de prise (15, 35) lorsque repositionnés, ledit élément de commande étant relié à un dispositif de suivi (12) monté sur ladite pince pour plante et est positionnable dans la direction perpendiculaire à la direction d'avancée de ladite ligne d'alimentation, et dans lequel ledit dispositif (1) comporte un trajet de commande stationnaire (10) s'étendant dans la direction d'avancée desdites pinces pour plante avec lesquelles ledit dispositif de suivi (12) est mis en prise et avec des sections de trajet de commande pour ouvrir et fermer lesdits doigts de prise.

2. Dispositif selon la revendication 1, dans lequel ladite pince pour plante comporte une suspension longitudinale (8) et ledit élément s'étend dans une direction parallèle à ladite suspension.

3. Dispositif selon la revendication 2, dans lequel ladite suspension est constituée d'une section en grande partie fermée et ledit dispositif (17) est construit sous forme d'une tige s'étendant dans cette section.

4. Dispositif selon l'une quelconque des revendications précédentes, dans lequel lesdits moyens comportent une suspension (8) pour lesdites pinces de plante (6), disposée à une distance sensiblement égale à la ligne d'alimentation pour les pots et un dispositif de transport (19) monté sur ladite suspension pour ladite pince pour plante, dans lequel ledit dispositif de transport est rendu mobile en relation à ladite ligne d'alimentation pour les pots, dans lequel des moyens de commande sont présents pour commander la position dudit dispositif de transport (19) par rapport à ladite suspension (18).

5. Dispositif selon la revendication 4, dans lequel les moyens de commande comportent un dispositif de suivi (13) monté sur ledit dispositif de transport et un trajet de commande stationnaire (11) s'étendant dans la direction d'avancée desdites pinces pour plante pour saisir ledit dispositif de suivi, ledit trajet de commande comportant des sections de trajet de commande pour déplacer lesdites pinces pour plante dans une direction vers le haut et vers le bas.

6. Dispositif selon la revendication 4 ou 5, dans lequel le dispositif de transport est construit de manière télescopique en relation avec ladite suspension (18).

7. Dispositif selon l'une quelconque des revendications précédentes, dans lequel lesdits doigts de prise (15) sont montés sur un support, ledit support pouvant tourner en relation avec ladite pince pour plante (6) autour d'un axe (31) en grande partie perpendiculaire à la direction d'avancée de la ligne d'alimentation pour les pots.

8. Dispositif selon la revendication 7, dans lequel ledit support (14) comporte un réa (20) ayant une courroie (21) disposée dans celui-ci pour mettre en prise ledit réa (20).

9. Dispositif selon l'une quelconque des revendications précédentes, comportant des moyens de confinement de racines montés sur lesdites pinces pour plante et s'étendant entre lesdites pinces pour plante et la ligne d'alimentation pour les pots.

10. Dispositif selon la revendication 9, dans lequel lesdits moyens de confinement de racines comportent des éléments bombés rétractables.

11. Dispositif selon la revendication 9 ou 10, dans lequel lesdits moyens de confinement de racines comportent un dispositif de suivi pour mettre en fonctionnements lesdits élément bombés rétractables et un trajet de dispositif de suivi stationnaire qui s'étend dans la direction d'avancée desdites pinces pour plante, et comportent des sections de trajet de dispositif de suivi pour repositionner lesdits éléments de coque.

12. Dispositif selon l'une quelconque des revendications précédentes, dans lequel ladite ligne d'alimentation pour les pots comporte des moyens de rotation pour les pots (3).

13. Dispositif selon l'une quelconque des revendications précédentes, dans lequel lesdites sections de trajet comportent une section longitudinale (10, 11).

14. Dispositif selon l'une quelconque des revendications précédentes, dans lequel lesdits doigts de prise (3) de ladite pince pour plante (6) sont munis d'un couvercle (36) constitué d'un matériau en mousse pour venir en prise avec lesdites plantes et les saisir.
